# FASCICULE DE BREVET EUROPEEN

(11) **EP 1 772 851 B1**
(45) Date de publication et mention de la délivrance du brevet: **25.06.2008**
(21) Numéro de dépôt: 06020913.7
(22) Date de dépôt: 05.10.2006
(51) Int. Cl.: G10H 1/36, G10L 15/26

(54) **Système de karaoké pour l'affichage du texte correspondant à la partie vocale d'un flux audiovisuel sur un écran d'un système audiovisuel**
Karaokesystem zur Darstellung eines Gesangsteils eines audiovisuellen Datenflusses als Text auf dem Bildschirm eines Audiovisualsystemes
Karaoke system for displaying the text corresponding to the vocal part of an audiovisual flux on a display screen of an audiovisual system

(30) Priorité: 05.10.2005 FR 0510214
(43) Date de publication de la demande: 11.04.2007
(73) Titulaire: Sagem Communication S.A., 75015 Paris (FR)
(72) Inventeur: Depraeter, Philippe, 95720 Le Mesnil Aubry (FR)
(74) Mandataire: Maillet, Alain

(56) Documents cités:
- US-A1- 2002 147 589
- US-A1- 2005 056 140
- US-A1- 2005 216 257
- US-B1- 6 542 869

## Description

La présente invention concerne un système de karaoké pour l'affichage du texte correspondant à la partie vocale d'un flux audiovisuel sur un écran d'un système audiovisuel.

On connaît des systèmes audiovisuels, dits systèmes de karaoké, qui, d'une part, affichent sur un écran l'image d'un clip illustrant une chanson et reproduisent le son de l'accompagnement instrumental de cette chanson et qui, d'autre part, affichent de manière synchronisée le texte des paroles de la chanson. Ces systèmes de karaoké permettent à l'utilisateur de lire le texte des paroles de la chanson afin de pouvoir les chanter en même temps que le clip se déroule et que l'accompagnement instrumental est reproduit. L'utilisateur chante dans un microphone. Le son du chant est alors mixé à l'accompagnement instrumental pour reproduction.

Ces systèmes de karaoké utilisent des enregistrements vidéo préparés au préalable (par exemple en studio) pour permettre l'affichage à la fois du clip et du texte de la chanson correspondante ainsi que la reproduction de l'accompagnement instrumental de cette chanson. Ces enregistrements se présentent généralement sous forme des supports usuels des contenus audiovisuels (CDs, DVD....)

Le but de la présente invention est de proposer un système de karaoké qui n'utilise plus un enregistrement préparé à l'avance (en studio) tel qu'il vient d'être décrit mais qui fonctionne en temps réel sur un flux audiovisuel continu d'entrée. Dans la présente description, on appelle un flux audiovisuel un flux qui comprend au moins un flux vidéo et un flux audio correspondant à ce flux vidéo. Le flux audiovisuel d'entrée est par exemple un flux audiovisuel reçu d'un système de réception de flux audiovisuels diffusés ou un flux audiovisuel issu d'un enregistrement préalable mais qui n'est pas préparé au vue d'un affichage du texte de la chanson.

On connaît également dans l'état de la technique deux types de systèmes de traitement de signaux audio : des systèmes (cf. US 2005/056140) qui, dans un flux audio d'une chanson, peuvent éliminer les signaux audio qui correspondent aux paroles de cette chanson et donc ne restituer que l'accompagnement instrumental de cette chanson et des systèmes (cf. US 2005/216257) qui, dans un flux audio, peuvent recouvrer les signaux sonores qui correspondent à la parole et les transcrire sous la forme d'une suite de symboles, par exemple sous la forme de caractères ASCII, qui peuvent alors être affichés sur un écran, par exemple d'un ordinateur.

Ces systèmes de traitement de signaux audio pourraient être utilisés afin d'atteindre le but mentionné ci-dessus de la manière suivante. Le flux audio du flux audiovisuel d'entrée est transmis à un système de recouvrement et de transcription des paroles de la chanson, le texte issu de la transcription étant incrusté dans le flux vidéo en cours qui est alors affiché sur l'écran. Le flux audio est par exemple également traité de manière à ce que soit reproduit uniquement l'accompagnement instrumental de la chanson.

Une telle solution pose néanmoins un problème. En effet, les traitements du flux audio effectués par le système de recouvrement et de transcription des paroles ainsi que par le système de séparation de l'accompagnement instrumental nécessitent le déroulement d'algorithmes complexes dont les temps de traitement sont relativement longs, par exemple de l'ordre de plusieurs secondes. En conséquence, l'utilisation de ces systèmes implique un décalage temporel entre, d'une part, l'affichage du clip sur l'écran et la restitution sonore de l'accompagnement instrumental d'une chanson et, d'autre part, l'affichage du texte de ses paroles sur l'écran.

Un autre but de la présente invention est de proposer une solution à ce problème de décalage temporel (d'une manière similaire à la méthode selon US 2002/147589) et donc de proposer un système de karaoké qui fonctionne sur un flux audiovisuel continu d'entrée non préparé et dont l'affichage du texte des paroles soit synchronisé à l'affichage du clip et à la restitution de l'accompagnement instrumental.

A cet effet, la présente invention concerne un système de karaoké pour produire à partir d'un flux audiovisuel d'entrée un flux audiovisuel de sortie incluant des informations pour l'affichage sur un écran d'un système de télévision du texte correspondant à la partie vocale dudit flux audiovisuel d'entrée. Il comprend de plus une unité de traitement audio en temps réel qui reçoit en entrée le flux audio du flux audiovisuel d'entrée et qui délivre en sortie un flux vidéo de karaoké portant les informations du texte correspondant à la partie vocale dudit flux audiovisuel d'entrée, des moyens de mémorisation destinés à temporairement mémoriser le flux vidéo du flux audiovisuel d'entrée pendant un temps prédéterminé, et des moyens de combinaison prévus pour combiner le flux vidéo de karaoké au flux vidéo ayant été mémorisé dans lesdits moyens de mémorisation.

Selon une autre caractéristique de la présente invention, ledit flux audiovisuel d'entrée porte des informations de temps de présentation qui ne sont pas modifiées dans lesdits moyens de mémorisation et ledit flux de karaoké porte des informations de temps de présentation correspondant au temps de présentation du flux audio d'entrée ayant été utilisée pour sa formation.

Selon une autre caractéristique de la présente invention, ladite unité de traitement audio comporte des moyens de recouvrement-pour recouvrer le signal audio de base de la seule partie chant du flux audio d'entrée, des moyens de transcription prévus pour transcrire ledit signal audio de base en un signal sous la forme d'une suite continue de symboles, des moyens de découpage de ladite suite continue de symboles en une suite de séquences de texte correspondant aux phrases de karaoké qui seront affichées ultérieurement, et des moyens de mise en forme pour transcrire ladite suite de séquences de texte en un flux vidéo de karaoké.

Selon une autre caractéristique de la présente invention, ledit système de karaoké comporte des moyens de filtrage pour filtrer le flux audio d'entrée de manière à ne plus contenir que l'accompagnement de la chanson.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
La Fig. 1 est un schéma synoptique d'un système de karaoké selon la présente invention, et
La Fig. 2 est un diagramme illustrant le fonctionnement du système de karaoké selon la présente invention dans le cas d'une implémentation de celui-ci en utilisant la technologie dite MPEG.

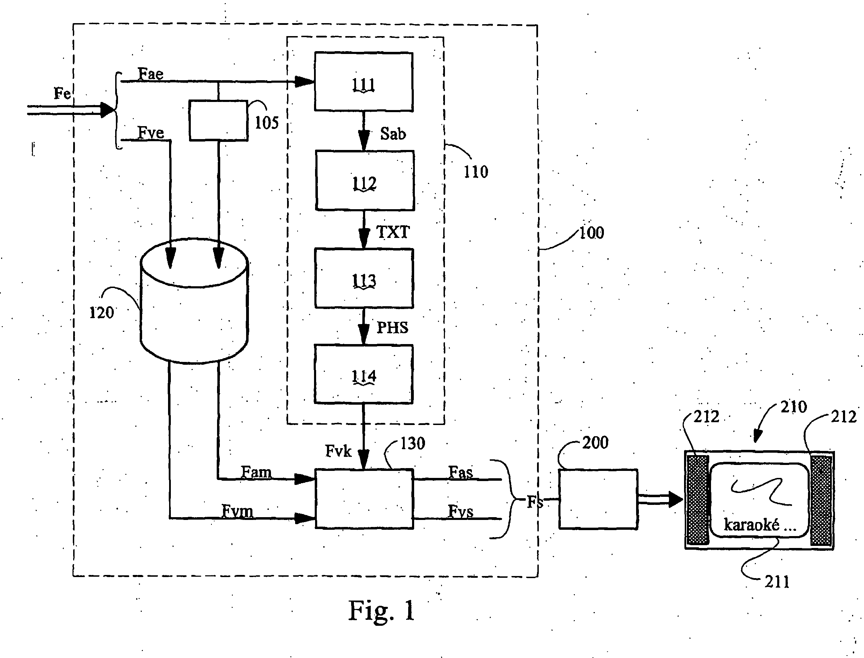

Le système de karaoké 100 représenté à la Fig. 1 est prévu pour recevoir un flux audiovisuel d'entrée Fe, par exemple d'un système de réception de programmes audiovisuels diffusé ou d'un système de reproduction d'un enregistrement effectué préalablement. Le flux audiovisuel Fe comporte, pour que la présente invention s'applique pleinement, un flux vidéo Fve concernant un clip illustrant une chanson ainsi qu'un flux audio Fae concernant les signaux audio de la partie chant de la chanson et, éventuellement, sa partie accompagnement instrumental. Le flux audio Fae en question peut être multiple, par exemple être lui-même constitué d'un flux audio correspondant à la partie chant et d'un autre flux audio correspondant à la partie accompagnement instrumental. Par ailleurs, le flux vidéo Fve ne comporte pas nécessairement d'informations permettant la reproduction du texte des paroles de la chanson.

Le système de karaoké 100 de la Fig. 1 est destiné à délivrer un flux audiovisuel de sortie Fs constitué de deux flux : un flux vidéo de sortie Fvs et un flux audio de sortie Fas. Le flux vidéo de sortie Fvs est identique au flux vidéo d'entrée avec en plus, néanmoins, des signaux pour l'affichage des paroles de la chanson correspondant au clip affiché. Ces signaux pour l'affichage des paroles peuvent être inclus dans un flux vidéo prévu à cette fin d'affichage inclus dans le flux vidéo de sortie Fvs. Quant au flux audio de sortie Fas, il est identique au flux audio d'entrée Fae sans; dans une variante de réalisation, les signaux audio ou flux audio correspondant aux paroles de la chanson du clip.

Le flux audiovisuel de sortie Fs est destiné à être décodé dans un décodeur 200 de manière à pouvoir être fourni, une fois décodé, à un appareil de reproduction 210 pourvu d'un écran 211 et de haut-parleurs 212 pour sa reproduction. Il pourrait également être fourni à tout autre appareil prévu à cet effet, tel qu'un enregistreur pour une reproduction ultérieure. De même, c'est le flux audiovisuel de sortie Fs qui pourrait être directement ou diffusé ou être enregistré.

Les flux audiovisuels d'entrée Fe et de sortie Fs peuvent être du type comprenant au moins un flux élémentaire de paquets de données vidéo et un flux élémentaire de paquets de données audio. Si l'on se réfère à la terminologie adoptée par le groupe MPEG (voir par exemple la norme ISO/IEC 13818), ces flux élémentaires de données sont généralement dits Elementary Streams, qui sont ensuite découpés en PES (Packetized Elementary Stream). Certains paquets de données PES incluent à intervalles réguliers, dans leur en-tête, une information de temps de présentation correspondant à l'instant relatif auquel les données qu'ils contiennent seront présentées à l'utilisateur. Cette information de temps est appelée, dans la terminologie MPEG, PTS pour Presentation Time Stamp.

Le système de karaoké 100 de la Fig. 1 comprend une unité de traitement audio 110 qui reçoit en entrée le flux audio Fae et qui délivre en sortie un flux vidéo de karaoké Fvk. Comme on le comprendra par la suite, l'unité de traitement audio 110 fonctionne en temps réel.

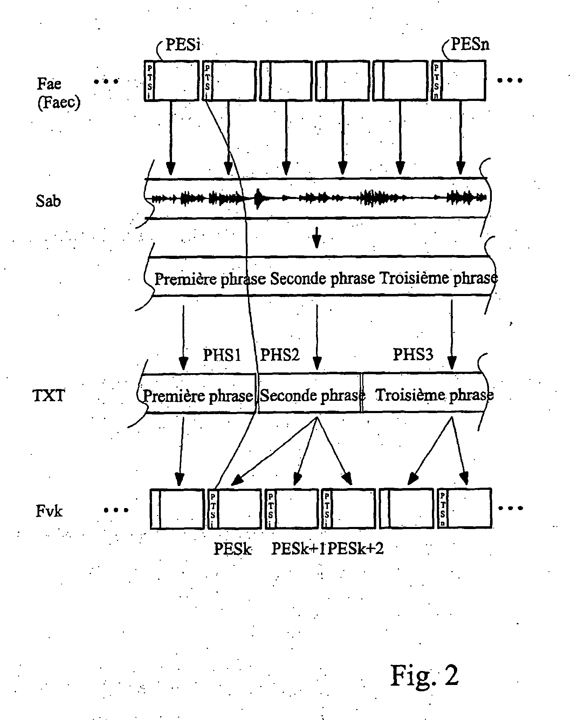

Dans la suite de la description, on se réfèrera à la Fig. 2 pour illustrer le fonctionnement de cette unité de traitement audio 110 dans un mode de réalisation utilisant la technologie MPEG mentionnée ci-dessus. On peut d'ores et déjà constater, sur cette Fig. 2, que le flux audio Fae est constitué de n paquets de données PESi à PESi+n, portant dans leurs en-têtcs respectifs des temps de présentation PTSi à PTSi+n.

L'unité de traitement audio 110 comprend des moyens de recouvrement 111 qui sont prévus pour recouvrer, à partir du flux audio d'entrée Fae, le signal audio de base de la seule partie chant. La fonction de recouvrement du signal audio de la seule partie chant des moyens de recouvrement 111 peut être mise en oeuvre au moyen d'un filtrage des fréquences généralement émises par la voix humaine et contenues dans le signal audio analogique directement représentatif du signal sonore. Ce signal audio analogique peut être présent tel quel dans le flux audio d'entrée Fae ou, si cela n'est pas le cas car le flux Fae est un flux numérique, par exemple du type MPEG, il peut être extrait par transcodage dudit flux numérique. A la Fig. 2, les paquets PESi à PESn sont ainsi soumis à un décodage de manière à pouvoir reconstruire le signal audio de base Sab concernant la seule partie du chant.

On notera que dans le cas où le flux audio d'entrée Fae inclut à la fois un flux audio concernant la partie chant de la chanson et un flux audio concernant la partie accompagnement instrumental, l'unité de traitement audio 110 et, en particulier, les moyens de recouvrement 111 ne traiteront que le flux audio concernant la partie chant de la chanson qui, à la Fig. 2, est noté Faec. Les paquets PESi à PESn de la Fig. 2 sont également les seuls paquets du flux audio de la partie chant de la chanson.

L'unité de traitement audio 110 comprend encore des moyens de transcription 112 prévus pour transcrire le signal audio Sab en un signal TXT sous la forme d'une suite continue de symboles, par exemple d'une suite de caractères ASCII représentatifs des mots des paroles du chant. Cette fonction de transcription peut être réalisée par un logiciel de reconnaissance vocale. La suite de symboles à la sortie des moyens de transcription 112 forme un texte TXT.

A la Fig. 2, le signal audio de base Sab issu des moyens de recouvrement 101 est traité de manière à pouvoir recouvrer sa transcription sous forme texte. Le texte suivant a été recouvré : "première phrase seconde phrase troisième phrase".

L'unité de traitement audio 110 comprend également des moyens 113 de découpage du texte TXT continu en une suite de séquences de texte qui correspondent aux phrases qui seront affichées ultérieurement pendant un temps déterminé sur l'écran de l'appareil de reproduction 200.

Comme cela est visible à la Fig. 2, par un traitement, par exemple, des blancs contenus dans le signal audio de base Sab, des césures de la transcription sous forme de texte sont effectuées aboutissant à des phrases PHS1, PHS2 et PHS3 qui seront précisément celles qui seront affichées sur l'écran de l'utilisateur. Ce traitement peut également prendre en considération la longueur de chaque phrase afin que celle-ci ne soit pas trop élevée. On procèdera de plus de manière que l'information de temps PTSj du paquet PESj dont les données ont servi au recouvrement du signal audio de base au moment d'une césure soit disponible et puisse être associée à ladite césure.

L'unité de traitement audio 110 comprend encore des moyens de mise en forme 114 prévus pour mettre en forme les signaux issus des moyens de transcription 113 sous forme de flux vidéo de karaoké Fvk portant les informations du texte correspondant à la partie vocale dudit flux audiovisuel d'entrée (Fe) sous une forme permettant sa combinaison à un flux vidéo, tel que le flux vidéo Fe, de manière à permettre ultérieurement l'affichage dudit texte sur l'écran d'un système de télévision tel que l'appareil de reproduction (210).

Dans un mode de réalisation utilisant la technologie MPEG, les moyens de mise en forme 114 sont prévus pour encapsuler les données de chaque phrase dans au moins un paquet élémentaire PESj incluant l'information de temps PTSj associée à la césure du début de cette phrase. Un tel paquet élémentaire pourrait être du type paquet de sous-titrage tel que décrit dans la norme ETSI 300-743 ou du type paquet de télétexte tel que décrit dans la norme ETSI EN 300-472. A la Fig. 2, la phrase PHS2 est encapsulée dans trois paquets élémentaires PESk à PESk+2 dont l'information de temps de présentation est la même et égale à PTSj.

Dans une variante de réalisation, l'information de temps PTSj' associée à une césure est inférieure, d'une quantité prédéterminée, à l'information de temps PTSj du paquet PESj dont les données ont servi au recouvrement du signal audio de base au moment de ladite césure.

Le temps global du traitement effectué par l'unité de traitement audio 110 doit être pris en compte pour que le flux audio de sortie Fas et le flux vidéo de sortie Fvs, contenant le texte des paroles de la chanson, soient synchronisés. Pour ce faire, le système de karaoké 100 comprend des moyens de mémorisation 120 destinés à temporairement mémoriser les flux vidéo d'entrée Fve et audio d'entrée Fae pendant un temps prédéterminé, par exemple de 10 secondes.

Les moyens de mémorisation 120 sont par exemple constitués d'une mémoire RAM ou d'une mémoire de masse telle qu'une unité dé disque dur.

Le système de karaoké 100 comprend encore des moyens de mélange 130 prévus pour mélanger le flux vidéo de karaoké Fvk issu des moyens de mise en forme 114 et le ou les flux vidéo ou audio ayant été mémorisés Fvm. Les flux résultants respectifs sont le flux vidéo de sortie Fvs, lequel inclus le flux vidéo mémorisé et le flux vidéo de karaoké, et le flux audio de sortie Fas.

Dans le cas où la technologie MPEG est utilisée, dans les moyens de mélange 130, les paquets de sous-titrage PESj forment un flux vidéo à part qui, associé au flux audiovisuel issu des moyens de mémorisation 110, forme ce que l'on a appelé le flux audiovisuel de sortie Fs.

Le système de karaoké 100, dans un mode de réalisation de la présente invention, comprend également des moyens de filtrage 105 pour filtrer le flux audio d'entrée (Fae) de manière à ne plus contenir que l'accompagnement de la chanson. Dans le cas où le flux audio d'entrée Fae inclut à la fois un flux audio concernant la partie chant de la chanson et un flux audio concernant la partie accompagnement instrumental, les moyens de filtrage 105 ne laisseront passer que le flux audio de la partie accompagnement instrumental.

## Revendications

1. Système de karaoké pour produire à partir d'un flux audiovisuel d'entrée (Fe) un flux audiovisuel de sortie (Fs) incluant des informations pour l'affichage sur un écran d'un système de télévision (200) du texte correspondant à la partie vocale dudit flux audiovisuel d'entrée (Fe), chacun desdits flux audiovisuels (Fe ; Fs) comprenant au moins un flux audio(Fae ; Fas) et un flux vidéo (Fve ; Fvs), **caractérisé en ce qu'**il comprend :
- une unité (110) de traitement audio en temps réel qui reçoit en entrée au moins un flux audio (Fae) du flux audiovisuel d'entrée (Fe) et qui délivre en sortie un flux vidéo de karaoké (Fvk) portant les informations du texte correspondant à la partie vocale dudit flux audiovisuel d'entrée (Fe),
- des moyens de mémorisation (120) destinés à temporairement mémoriser au moins ledit flux vidéo (Fve) du flux audiovisuel d'entrée (Fe) pendant un temps prédéterminé, et
- des moyens de mélange (130) prévus pour mélanger le flux vidéo de karaoké (Fvk) au ou aux flux (Fvm) ayant été mémorisé(s) dans lesdits moyens de mémorisation (120).

2. Système de karaoké selon la revendication 1, **caractérisé en ce que** ledit flux d'entrée (Fe) porte des informations de temps de présentation qui ne sont pas modifiées dans lesdits moyens de mémorisation (120) et **en ce que** ledit flux de karaoké (Fvk) porte des informations de temps de présentation correspondant au temps de présentation du flux audio d'entrée (Fae) ayant été utilisée pour sa formation.

3. Système de karaoké selon la revendication 2, **caractérisé en ce que** ladite unité de traitement audio (110) comporte :
- des moyens de recouvrement (111) pour recouvrer le signal audio de base (Sab) de la seule partie chant du flux audio d'entrée (Fae) ou du flux audio d'entrée concernant la partie chant,
- des moyens de transcription (112) prévus pour transcrire ledit signal audio de base (Sab) en un signal (TXT) sous la forme d'une suite continue de symboles,
- des moyens de découpage (113) de ladite suite continue de symboles en une suite de séquences de texte (PHS) correspondant aux phrases de karaoké qui seront affichées ultérieurement, et
- des moyens de mise en forme (114) pour transcrire ladite suite de séquences de texte (PHS) en un flux vidéo de karaoké (Fvk).

4. Système de karaoké selon une des revendications précédentes, **caractérisé en ce qu'**il comporte des moyens de filtrage (105) pour filtrer le flux audio d'entrée (Fae) de manière à ne plus contenir que l'accompagnement de la chanson.

## Claims

1. Karaoke system for producing, from an audiovisual input stream (Fe), an audiovisual output stream (Fs) including data for displaying, on a screen of a television system (200), text corresponding to the vocal part of said audiovisual input stream (Fe), each of said audiovisual streams (Fe; Fs) comprising at least one audio stream (Fae; Fas) and one video stream (Fve; Fvs), **characterised in that** it comprises:
a real-time audio processing unit (110) which receives at its input at least one audio stream (Fae) of the audiovisual input stream (Fe) and which delivers at its output a karaoke video stream (Fvk) carrying the text data corresponding to the vocal part of said audiovisual input stream (Fe),
memory means (120) intended for temporarily storing at least said video stream (Fve) of the audiovisual input stream (Fe) for a predetermined time, and
mixing means (13) provided for mixing the karaoke video stream (Fvk) with the stream or streams (Fvm) that have been stored in said memory means (120).

2. Karaoke system according to claim 1, **characterised in that** said input stream (Fe) carries presentation time data that are not modified in said memory means (120) and **in that** said karaoke stream (Fvk) carries presentation time data corresponding to the presentation time of the audio input stream (Fae) that has been used to form it.

3. Karaoke system according to claim 2, **characterised in that** said audio processing unit (110) comprises:
- overlaying means (111) for overlaying the basic audio signal (Sab) only of the song part of the audio input stream (Fae) or of the audio input stream relating to the song part,
- transcribing means (112) provided for transcribing said basic audio signal (Sab) into a signal (TXT) in the form of a continuous series of symbols,
- means (113) for cutting up said continuous series of symbols into a series of text sequences (PHS) corresponding to the karaoke phrases that will be displayed later, and
- forming means (114) for transcribing said series of text sequences (PHS) into a karaoke video stream (Fvk).

4. Karaoke system according to one of the preceding claims, **characterised in that** it comprises filtering means (105) for filtering the audio input stream (Fae) so that it no longer contains anything other than the accompaniment to the song.

## Patentansprüche

1. Karaokesystem, um aus einem audiovisuellen Eingangsstrom (Fe) einen audiovisuellen Ausgangsstrom (Fs) zu erzeugen, einschließlich Informationen für die Anzeige des dem Vokalteil des audiovisuellen Eingangsstroms (Fe) entsprechenden Textes auf einem Bildschirm eines Fernsehsystems (200), wobei jeder der audiovisuellen Ströme (Fe; Fs) mindestens einen Audiostrom (Fae; Fas) und einen Videostrom (Fve; Fvs) umfasst, **dadurch gekennzeichnet, dass** es umfasst:
- eine Echtzeit-Audiobearbeitungseinheit (110), die am Eingang mindestens einen Audiostrom (Fae) des audiovisuellen Eingangsstroms (Fe) empfängt und am Ausgang einen Karaokevideostrom (Fvk) liefert, der die Informationen des dem Vokalteil des audiovisuellen Eingangsstroms (Fe) entsprechenden Textes trägt,
- Speichermittel (120), die dazu bestimmt sind, vorübergehend mindestens den Videostrom (Fve) des audiovisuellen Eingangsstroms (Fe) während einer vorbestimmten Zeit zu speichern, und
- Mischmittel (130), die dazu vorgesehen sind, den Videokaraokestrom (Fvk) mit dem oder den Strömen (Fvm) zu mischen, die in den Speichermitteln (120) gespeichert wurden.

2. Karaokesystem nach Anspruch 1, **dadurch gekennzeichnet, dass** der Eingangsstrom (Fe) Darstellungszeitinformationen trägt, die in den Speichermitteln (120) nicht verändert werden, und dass der Karaokestrom (Fvk) Darstellungszeitinformationen trägt, die der Darstellungszeit des Eingangsaudiostroms (Fae), der zu seiner Bildung verwendet wurde, entsprechen.

3. Karaokesystem nach Anspruch 2, **dadurch gekennzeichnet, dass** die Audiobearbeitungseinheit (110) umfasst:
- Abdeckungsmittel (111), um das Basisaudiosignal (Sab) nur des Kantenteils des Eingangsaudiostroms (Fae) oder des den Kantenteil betreffenden Eingangsaudiostroms abzudecken,
- Transkriptionsmittel (112), die dazu vorgesehen sind, das Basisaudiosignal (Sab) in ein Signal (TXT) in Form einer kontinuierlichen Symbolfolge zu transkribieren,
- Mittel (113) zum Schneiden der kontinuierlichen Symbolfolge in eine Folge von Textsequenzen (PHS), die den Karaokephrasen entsprechen, die später angezeigt werden, und
- Formungsmittel (114), um die Folge von Textsequenzen (PHS) in einen Karaokevideostrom (Fvk) zu transkribieren.

4. Karaokesystem nach einem der vorhergehenden Ansprüche, **dadurch gekennzeichnet, dass** es Filtermittel (105) umfasst, um den Eingangsaudiostrom (Fae) derart zu filtern, dass er nur noch die Begleitung des Liedes enthält.
